# EUROPÄISCHE PATENTSCHRIFT

(11) **EP 2 420 672 B1**
(45) Veröffentlichungstag und Bekanntmachung des Hinweises auf die Patenterteilung: **25.01.2017**
(21) Anmeldenummer: 11177566.4
(22) Anmeldetag: 15.08.2011
(51) Int. Cl.: F03D 3/04, F03D 3/00

(54) **Windturbine**
Wind turbine
Eolienne

(30) Priorität: 17.08.2010 DE 202010011596 U; 20.10.2010 DE 102010048815
(43) Veröffentlichungstag der Anmeldung: 22.02.2012
(73) Patentinhaber: Scheid, Ralf, 90513 Zirndorf (DE); Helm, Thomas, 90768 Fürth (DE); Leisch, Norbert, 90562 Kalchreuth (DE)
(72) Erfinder: Scheid, Ralf, 90513 Zirndorf (DE); Helm, Thomas, 90768 Fürth (DE); Leisch, Norbert, 90562 Kalchreuth (DE)
(74) Vertreter: Dr. Gassner & Partner mbB

(56) Entgegenhaltungen:
- EP-A1- 1 961 956
- WO-A2-2007/066207
- FR-A1- 2 874 240
- US-A- 4 433 544
- US-A- 5 300 817
- US-A1- 2003 175 109

## Beschreibung

Die Erfindung betrifft eine Windturbine, mit einem unter der Wirkung eines Luftstroms um eine vertikale Achse drehbaren Rotor, den Rotor außenseitig umgebenden Luftleitelementen und einer mit einem Generator koppelbaren oder gekoppelten Rotorwelle.

Windkraftanlagen dienen zur Umwandlung von kinetischer Energie eines Luftstroms in elektrische Energie, indem Rotorblätter durch die kinetische Energie in Drehung versetzt werden, wodurch ein Generator angetrieben wird.

Windturbinen mit vertikaler Drehachse eignen sich zur Stromerzeugung an Stellen, an denen turbulente Luftströmungen oder stark wechselnde Thermik auftreten. Beispiele für geeignete Aufstellorte sind Gebäude mit Flachdächern in Innenstädten, Steilabbruchkanten oder Berggipfel.

In der DE 10 2009 004 016 A1 wird eine Windturbine beschrieben, die einen Rotor mit vertikaler Rotorwelle aufweist, der senkrecht stehende Treibschaufeln besitzt. Die Treibschaufeln sind so angeordnet, dass zwischen zwei benachbarten Treibschaufeln ein Strömungskanal mit sich verringerndem Querschnitt gebildet ist. Die Luft durchströmt den Rotor und verlässt diesen an der dem Wind abgewandten Seite. Der Rotor ist von stationären Leitschaufeln umgeben, wodurch die Windauffangfläche vergrößert werden soll.

Derartige Windturbinen weisen allerdings den Nachteil auf, dass im Inneren ein hoher Staudruck entsteht, der die Leistung und den Wirkungsgrad der Windturbine beeinträchtigt.

In der DE 697 16 743 T2 wird eine Windturbine vorgeschlagen, bei der ein Schaufeln aufweisender Rotor im Inneren eines Schaufeln aufweisenden Stators angeordnet ist. Der Stator umgibt den Rotor dabei wie ein Gehäuse. Die Schaufeln des Rotors und des Stators sind so angeordnet, dass die durch die Windturbine strömende Luft in Rotation versetzt wird und die Windturbine an der dem Wind abgewandten Seite verlässt. Allerdings weist auch diese Windturbine den Nachteil der Entstehung eines hohen Staudrucks in ihrem Inneren auf.

In der EP 1 961 956 A1 wird eine Windturbine beschrieben, die einen Rotor mit senkrecht stehenden Rotorblättern aufweist. Der Boden des Rotors ist an einer Unterseite der Rotorblätter flach ausgebildet und weist einen kegelstumpfförmigen zentralen Vorsprung auf.

In der WO 2007/066207 A2 wird eine Maschine zur Erzeugung von elektrischer Energie aus Windenergie mit einer oberen und einer unteren Turbine offenbart. Der Wind strömt jeweils auf einer äußeren Oberfläche der Turbinen entlang.

Die US 2003/0175109 A1 betrifft eine Turbine zur Erzeugung von elektrischer Energie, welche an einem Ausgang mit Mitteln zur Erzeugung von Unterdruck verbunden sind.

Die US 5,300,817 A offenbart eine Solarventuriturbine, welche geneigte Strömungskanäle aufweist. Dabei sind die durch Sonnenstrahlen erwärmbaren Flächen auf der Außenseite eines Venturirohrs angeordnet, in dessen Inneren sich eine Turbine dreht.

Die FR 2874240 A1 offenbart einen Windenergiegeneratorturm mit einem am Boden angeordneten Strömungsleitkegelelement. Im oberen Bereich des Turms ist eine Vielzahl von Turbinen hintereinander geschaltet.

Die US 4,433,544 A offenbart eine Solarthermie-Wind-Turbine, bei der eine Windströmung aus einer horizontalen Richtung in eine vertikale Richtung umgeleitet wird.

Der Erfindung liegt daher die Aufgabe zugrunde, eine Windturbine anzugeben, die von einer Luftströmung durchströmt werden kann, ohne dass sich ein unerwünschter hoher Staudruck aufbaut.

Zur Lösung dieser Aufgabe ist bei einer Windturbine der eingangs genannten Art erfindungsgemäß vorgesehen, dass der Rotor einen Strömungskanal umgibt, wobei der Strömungskanal eine Strömungsumlenkfläche zum Umlenken des Luftstroms zu einer Auslassöffnung aufweist, wobei die Strömungsumlenkfläche zumindest näherungsweise kegelförmig oder hyperbolisch ausgebildet ist und einen abgerundeten Fußbereich aufweist, welcher geneigt ansteigt und in Strömungsrichtung an eine geneigte untere Fläche des Rotors angrenzt, wobei die untere Fläche und der Fußbereich stetig ineinander übergehen.

Der Erfindung liegt die Erkenntnis zugrunde, dass die Entstehung des unerwünschten Staudrucks im Inneren der Windturbine verhindert werden kann, sofern der Rotor einen Strömungskanal umgibt, der eine Strömungsumlenkfläche zum Umlenken des Luftstroms zu einer Auslassöffnung aufweist. Da der Luftstrom anders als bei herkömmlichen Windturbinen nicht im Inneren der Windturbine gestaut wird, kann kein unerwünscht hoher Staudruck entstehen. Die Strömungsumlenkfläche umgibt erfindungsgemäß den Rotor, das heißt sie ist im Inneren des Rotors angeordnet.

Gemäß einer Weiterbildung der Erfindung kann die Strömungsumlenkfläche bei der erfindungsgemäßen Windturbine zumindest näherungsweise kegelförmig ausgebildet sein. Durch die rotationssymmetrische, kegelförmige Ausgestaltung der Strömungsumlenkfläche wird sicher gestellt, dass der Luftstrom, der horizontal spiralförmig durch die Luftleitelemente und den Rotor einströmt, nach dem Passieren des Rotors zu der Auslassöffnung umgelenkt wird. Die vorzugsweise als Kegel ausgebildete Strömungsumlenkfläche bewirkt dabei, dass die der Luftströmung aufgezwungene Richtungsänderung stetig ist, sodass keine Turbulenzen entstehen.

Es wird besonders bevorzugt, dass die Strömungsumlenkfläche eine hyperbolische Form aufweist.

Ein noch höherer Wirkungsgrad ergibt sich bei der erfindungsgemäßen Windturbine, wenn sie ein Mittel zum Erzeugen von Unterdruck im Bereich der Auslassöffnung aufweist. Durch das optional vorgesehene Unterdruckerzeugungsmittel wird ein Sog erzeugt, der sich über die Auslassöffnung entgegengesetzt zur Strömungsrichtung fortpflanzt und die Durchströmung fördert, ohne dass unzulässig hohe Strömungswiderstände entstehen.

Bei der erfindungsgemäßen Windturbine kann das Mittel zum Erzeugen von Unterdruck eine Venturidüse umfassen, in die der Strömungskanal mündet. Eine Venturidüse ist ein Strömungskanal, der einen Abschnitt mit verringertem Durchmesser aufweist, wodurch sich die Geschwindigkeit des durchströmenden Mediums erhöht. Wenn der Strömungskanal der erfindungsgemäßen Windturbine in dem Bereich der Venturidüse mit verringertem Durchmesser mündet, entsteht durch den Unterdruck in der Venturidüse ein Sog, sodass der die Windturbine durchströmende Luftstrom von der Auslassöffnung her abgesaugt wird. Da der Strömungskanal im Inneren der Windturbine einen stetigen Verlauf aufweist, bleibt die Strömung laminar und damit widerstandsarm.

Eine noch bessere Wirkung, auch bei beliebigen Windrichtungen, ergibt sich, wenn das Mittel zum Erzeugen von Unterdruck, insbesondere die Venturidüse, drehbar gelagert ist und eine Windfahne umfasst. Die Windfahne ist dazu so ausgebildet, dass sie sich in den Wind stellt, das heißt unter dem Einfluss der Windanströmung dreht sie sich so parallel zum Wind, dass der durch sie erzeugte Widerstand minimal ist. In diesem Zustand wird die Venturidüse in Längsrichtung durchströmt, sodass der erzeugte Unterdruck maximal ist.

Bei der erfindungsgemäßen Windturbine kann es vorgesehen sein, dass der Strömungskanal einen sich zumindest abschnittsweise in Strömungsrichtung verringernden Querschnitt aufweist. Durch den sich verringernden Querschnitt wird eine zumindest geringe Kompression der durchströmenden Luftströmung bewirkt, die sich vorteilhaft auf den Antrieb des Rotors und des Generators auswirkt. Gemäß einer Weiterbildung der erfindungsgemäßen Windturbine kann es vorgesehen sein, dass die Strömungsumlenkfläche einen abgerundeten Fußbereich aufweist und der Rotor und die Strömungsumlenkfläche vorzugsweise stetig ineinander übergehen. Die stetigen Krümmungen bewirken, dass die gewünschte laminare Strömung im Inneren der Windturbine aufrechterhalten wird. Die Strömungsumlenkfläche ist so geformt, dass die Luftströmung näherungsweise um 90° nach oben abgelenkt wird, von wo aus sie die Windturbine durch die Auslassöffnung verlässt.

Es liegt auch im Rahmen der Erfindung, dass die den Rotor umgebenden Luftleitelemente als profilierte Leitschaufeln ausgebildet sind und die von benachbarten Leitschaufeln begrenzten Kanäle einen sich in Strömungsrichtung verjüngenden Querschnitt aufweisen.

Die Leitschaufeln sind so ausgebildet und angeordnet, dass die Luftströmung entlang einer spiralförmigen Bahn zum Zentrum des Rotors geführt wird.

Um die einströmende Luftmenge zu steuern, kann es bei der erfindungsgemäßen Windturbine vorgesehen sein, dass die zwischen benachbarten Luftleitelementen gebildeten Öffnungen ganz oder teilweise verschließbar sind. Die Öffnungen können beispielsweise durch steuerbare Deckel, Klappen oder Jalousien selektiv geöffnet oder geschlossen werden. Dazu kann vorzugsweise eine Steuerungseinrichtung vorgesehen sein, die auch zur Absicherung gegenüber Starkwindböen eingesetzt werden kann.

Weitere Vorteile und Einzelheiten der Erfindung werden anhand eines Ausführungsbeispiels unter Bezugnahme auf die Zeichnungen erläutert. Die Zeichnungen sind schematische Darstellungen und zeigen:
- Fig. 1: eine entlang der Linie I-I von Fig. 2 geschnittene Ansicht einer erfindungsgemäßen Windturbine;
- Fig. 2: eine geschnittene Seitenansicht der erfindungsgemäßen Windturbine von Fig. 1;
- Fig. 3: eine Seitenansicht der Luftleitelemente der erfindungsgemäßen Windturbine und
- Fig. 4: eine perspektivische Ansicht der Luftleitelemente von Fig. 3.

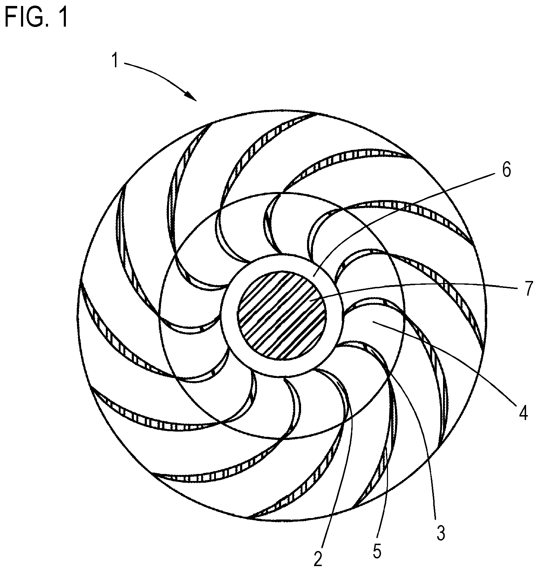

Die in Fig. 1 in einer geschnittenen Ansicht gezeigte Windturbine 1 umfasst einen Rotor 2, der um eine vertikale Achse drehbar ist. Der Rotor 2 umfasst in Umfangsrichtung voneinander beabstandet angeordnete Rotorschaufeln 3, die in dem Rotor 2 senkrecht stehen, wobei benachbarte Rotorschaufeln 3 Strömungskanäle 4 begrenzen, deren Querschnitt sich in Strömungsrichtung verjüngt. Die Rotorschaufeln 3 sind profiliert ausgebildet.

Der Rotor 2 ist außenseitig von Luftleitelementen 5 umgeben, die als Leitschaufeln ausgebildet sind. In dem dargestellten Ausführungsbeispiel entspricht die Anzahl der Rotorschaufeln 3 der Anzahl der Luftleitelemente 5, es sind jedoch auch andere Ausführungen denkbar, bei denen die Anzahl der Rotorschaufeln sich von der Anzahl der Luftleitelemente unterscheidet. Wie in Fig. 1 gezeigt ist, gehen die Rotorschaufeln 3 und die Luftleitelemente 5 zumindest näherungsweise stetig ineinander über.

Der Rotor 2 ist an der Oberseite und an der Unterseite geschlossen, dasselbe gilt für die stationären Luftleitelemente 5, die einen Ring bilden, der oberseitig und unterseitig geschlossen ist.

Im Inneren des Rotors 2 befindet sich ein Freiraum 6, der in der Schnittdarstellung von Fig. 1 ringförmig erscheint und in dessen Zentrum eine kegelförmige Strömungsumlenkfläche 7 angeordnet ist. Bei anderen Ausführungen kann die Strömungsumlenkfläche eine hyperbolische Form aufweisen.

Ein in die Windturbine 1 einströmender Luftstrom durchströmt zunächst die Luftleitelemente 5, anschließend den Strömungskanal 4 des Rotors 2 und gelangt über den Freiraum 6 zu einer in Fig. 1 nicht sichtbaren Auslassöffnung, von wo aus die Luftströmung in die Windturbine 1 verlässt. Beim Durchströmen der Windturbine 1 wird der mit einem Generator zur Erzeugung von elektrischer Energie gekoppelte Rotor 2 in Drehung versetzt. Da der Luftstrom beim Durchströmen von einer horizontalen Strömungsrichtung in eine vertikale Strömungsrichtung umgelenkt wird, wird im Inneren der Windturbine 1 kein übermäßiger Staudruck aufgebaut, der sich ansonsten nachteilig auf den Wirkungsgrad und die abgegebene Leistung auswirken würde.

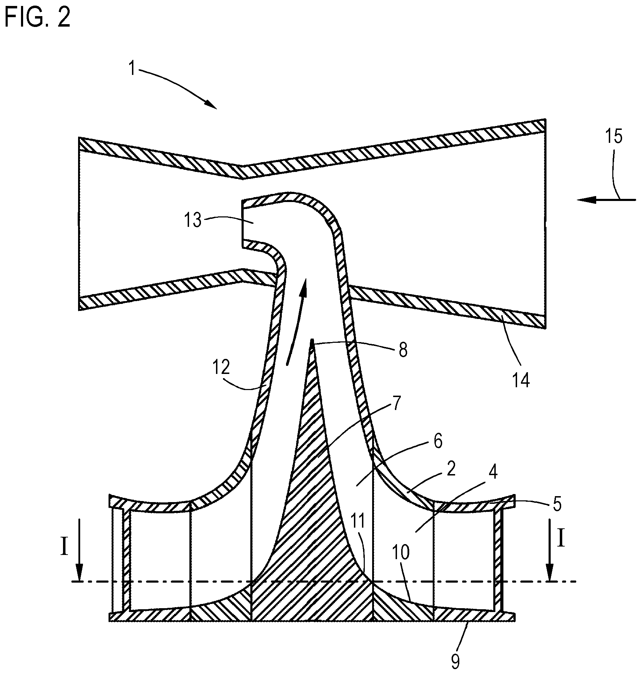

Fig. 2 zeigt die Windturbine 1 in einer geschnittenen Seitenansicht. In Fig. 2 erkennt man, dass die Strömungsumlenkfläche 7 zumindest näherungsweise kegelförmig ausgebildet ist und eine nach oben weisende Spitze 8 aufweist. Ebenso ist ersichtlich, dass im Bereich der stationären Luftleitelemente 5 ein Boden 9 vorgesehen ist, der in Strömungsrichtung ansteigt, wodurch der Strömungsquerschnitt verringert und die Luftströmung zumindest geringfügig verdichtet wird. An die Luftleitelemente 5 schließt sich stetig der Rotor 2 an, der ebenfalls eine geneigte untere Fläche 10 aufweist. In Strömungsrichtung grenzt an die untere Fläche 10 des Rotors 2 ein geneigter ansteigender Fußbereich 11 der kegelförmigen Strömungsumlenkfläche 7 an, wobei die untere Fläche 10 und der Fußbereich 11 stetig ineinander übergehen. Beim Durchströmen der Windturbine 1 wird der Luftstrom durch die Strömungsumlenkfläche 7 von einer horizontalen Strömungsrichtung um näherungsweise 90° nach oben in eine vertikale Strömungsrichtung umgelenkt.

Oberhalb des Rotors 2 ist ein Strömungskanal 12 vorgesehen, dessen Querschnitt sich in Strömungsrichtung verjüngt und der flächenbündig mit der Innenseite des Rotors 2 abschließt. In seinem oberen Bereich weist der Strömungskanal 12 eine Auslassöffnung 13 auf, die in dem dargestellten Ausführungsbeispiel um ca. 90° abgewinkelt ist, sodass die Luftströmung die Auslassöffnung 13 näherungsweise waagerecht verlässt. Die Auslassöffnung 13 des Strömungskanals 12 mündet in eine Venturidüse 14, die in Richtung des Pfeils 15 durchströmt wird. Die Venturidüse 14 weist einen sich konisch verjüngenden Einlassbereich und einen sich konisch erweiternden Auslassbereich auf, in der Nähe des kleinsten Durchmessers der Venturidüse 14 wird die durchströmende Luft beschleunigt, sodass ein Unterdruck entsteht, der die aus der Auslassöffnung 13 ausströmende Luft ansaugt. Somit unterstützt die Venturidüse 14 das Durchströmen der Luftströmung durch die Windturbine 1. Durch den im Bereich der Auslassöffnung 13 erzeugten Unterdruck wird vom Rotor 2 in den Freiraum 6 geförderte Luft beschleunigt, wodurch der Luftdurchsatz erhöht wird. Die Venturidüse 14 ist über eine nicht dargestellte Lagerung drehbar ausgebildet, eine Windfahne bewirkt, dass die Venturidüse sich immer "in den Wind" dreht.

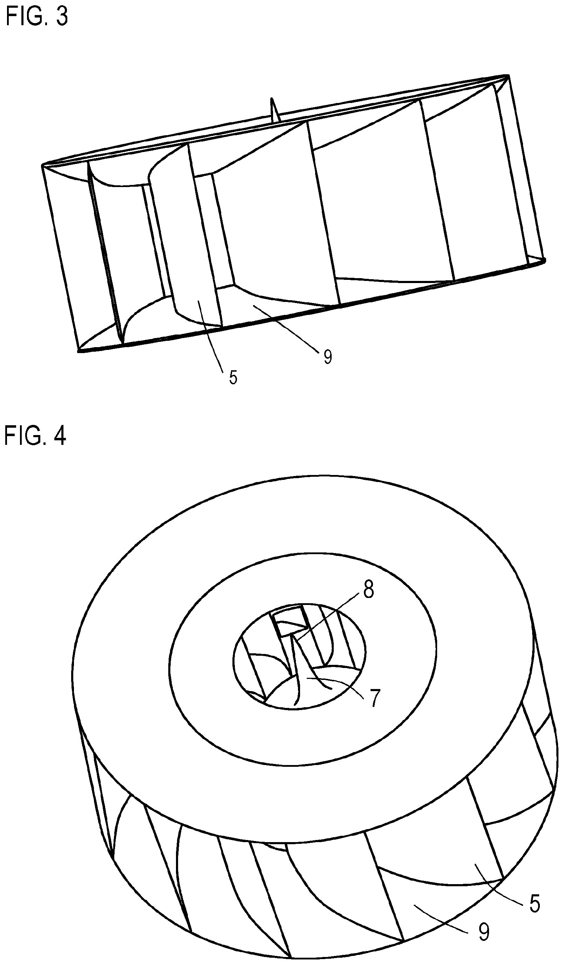

In der Seitenansicht von Fig. 3 und der perspektivischen Ansicht von Fig. 4 sind die Luftleitelemente 5 sowie der in Strömungsrichtung ansteigende Boden 9 gezeigt. Durch die Position der Luftleitelemente 5 ist gewährleistet, dass unabhängig von der Anströmrichtung und somit unabhängig von der aktuellen Windrichtung stets Luft in die Windturbine 1 einströmt, die entlang eines spiralförmigen Strömungswegs durch den Rotor 2 strömt, diesen dabei in Drehung versetzt und im Bereich der zentralen kegelförmigen Strömungsumlenkfläche 7 vertikal nach oben abgelenkt wird und die Windturbine 1 über die Auslassöffnung 13 verlässt.

Die in den Fig. 1 bis 4 gezeigte Windturbine eignet sich besonders für die Aufstellung auf Gebäuden, daneben kann sie auch auf Berggipfeln oder an anderen Orten platziert werden, wo stark wechselnde Thermik oder turbulente Luftströmungen zu erwarten sind.

Eine in den Zeichnungen nicht dargestellte Rotorwelle ist mit einem Generator verbunden, um die Bewegungsenergie des Rotors in elektrische Energie umzuwandeln. Der Generator ist mit einem Wechselrichter gekoppelt, um die zur Netzeinspeisung erforderliche Wechselspannung zu erzeugen.

Aus Sicherheitsgründen weist der Rotor 2 wenigstens einen Drehzahlsensor auf, um die Drehzahl zu überwachen und bei einer Überschreitung der höchstzulässigen Drehzahl einen Abbremsvorgang vornehmen zu können. Daneben kann ein Drucksensor, ein Strömungssensor, ein Vibrationssensor oder ein Temperatursensor vorhanden sein.

Um eine Überlastung bei sehr hohen Windgeschwindigkeiten zu vermeiden, können die zwischen benachbarten Luftleitelementen gebildeten Öffnungen ganz oder teilweise verschlossen werden. Dazu können Jalousien an der Außenseite der Luftleitelemente 5 vorgesehen sein, alternativ können die Öffnungen auch mittels Klappen oder dergleichen durch eine Steuerungseinrichtung gesteuert geöffnet oder geschlossen werden. Um eine Vereisung zu vermeiden, kann eine Heizeinrichtung, beispielsweise in Form einer Elektroheizung, im Bereich der stationären Luftleitelemente 5 vorgesehen sein, wodurch der Übergang zwischen den Luftleitelementen 5 und dem Rotor 2 vor Vereisung geschützt wird. Die Windturbine 1 kann eine Stahlkonstruktion als Unterbau aufweisen, zusätzlich kann wenigstens ein Vibrationsdämpfer vorgesehen sein, um die Übertragung von Rotorfrequenzen auf den Untergrund, insbesondere auf ein Gebäude, zu vermeiden.

## Patentansprüche

1. Windturbine (1), mit einem unter der Wirkung eines Luftstroms um eine vertikale Achse drehbaren Rotor (2), den Rotor (2) außenseitig umgebenden Luftleitelementen (5) und einer mit einem Generator koppelbaren oder gekoppelten Rotorwelle, wobei der Rotor (2) einen Strömungskanal (4) umgibt, **dadurch gekennzeichnet, dass** der Strömungskanal (4) eine Strömungsumlenkfläche (7) zum Umlenken des Luftstroms zu einer Auslassöffnung (13) aufweist, wobei die Strömungsumlenkfläche (7) zumindest näherungsweise kegelförmig oder hyperbolisch ausgebildet ist und einen abgerundeten Fußbereich (11) aufweist, welcher geneigt ansteigt und in Strömungsrichtung an eine geneigte untere Fläche (10) des Rotors (2) angrenzt, wobei die untere Fläche (10) und der Fußbereich (11) stetig ineinander übergehen.

2. Windturbine nach Anspruch 1, **dadurch gekennzeichnet, dass** sie ein Mittel zum Erzeugen von Unterdruck im Bereich der Auslassöffnung (13) aufweist.

3. Windturbine nach Anspruch 2, **dadurch gekennzeichnet, dass** das Mittel zum Erzeugen von Unterdruck eine Venturidüse (14) umfasst, in die der Strömungskanal mündet.

4. Windturbine nach Anspruch 3, **dadurch gekennzeichnet, dass** das Mittel zum Erzeugen von Unterdruck, insbesondere die Venturidüse (14), drehbar gelagert ist und vorzugsweise eine Windfahne umfasst.

5. Windturbine nach einem der vorangehenden Ansprüche, **dadurch gekennzeichnet, dass** der Strömungskanal einen sich zumindest abschnittsweise in Strömungsrichtung verringernden Querschnitt aufweist.

6. Windturbine nach einem der vorangehenden Ansprüche, **dadurch gekennzeichnet, dass** die den Rotor (2) umgebenden Luftleitelemente (5) als profilierte Leitschaufeln ausgebildet sind und die von benachbarten Leitschaufeln begrenzten Kanäle einen sich in Strömungsrichtung verjüngenden Querschnitt aufweisen.

7. Windturbine nach einem der vorangehenden Ansprüche, **dadurch gekennzeichnet, dass** die zwischen benachbarten Luftleitelementen (5) gebildeten Öffnungen ganz oder teilweise verschließbar sind.

8. Windturbine nach einem der vorangehenden Ansprüche, **dadurch gekennzeichnet, dass** eine Steuerungseinrichtung zum Öffnen und Schließen der Öffnungen vorgesehen ist.

## Claims

1. A wind turbine (1), comprising a rotor (2), which is rotatable about a vertical axis under the action of an airflow, air-guiding elements (5) surrounding the rotor (2) externally, and a rotor shaft, which can be coupled or is coupled to a generator, wherein the rotor (2) surrounds a flow channel (4), **characterised in that** the flow channel (4) has a flow deflection surface (7) for deflecting the airflow to an outlet opening (13), wherein the flow deflection surface (7) is at least approximately conical or hyperbolic and has a rounded foot region (11), which rises in an inclined manner and borders an inclined lower surface (10) of the rotor (2) in the flow direction, wherein the lower surface (10) and the foot region (11) transition into one another continuously.

2. The wind turbine according to claim 1, **characterised in that** it comprises a means for generating negative pressure in the region of the outlet opening (13).

3. The wind turbine according to claim 2, **characterised in that** the means for generating negative pressure comprises a Venturi system (14), into which the flow channel leads.

4. The wind turbine according to claim 3, **characterised in that** the means for generating negative pressure, in particular the Venturi system (14), is rotatably mounted and preferably comprises a weathervane.

5. The wind turbine according to any one of the preceding claims, **characterised in that** the flow channel has a cross-section that reduces in the flow direction, at least in part.

6. The wind turbine according to any one of the preceding claims, **characterised in that** the air-guiding elements (5) surrounding the rotor (2) are formed as profiled guide vanes and the channels delimited by adjacent guide vanes have a cross-section that tapers in the flow direction.

7. The wind turbine according to any one of the preceding claims, **characterised in that** the openings formed between adjacent air-guiding elements (5) can be closed fully or in part.

8. The wind turbine according to any one of the preceding claims, **characterised in that** a control device is provided for opening and closing the openings.

## Revendications

1. Éolienne (1) ayant un rotor (2) tournant autour d'un axe vertical sous l'effet d'un courant d'air, des éléments de guidage d'air (5) entourant le rotor (2) sur un côté extérieur et un arbre de rotor couplé ou pouvant être couplé à un générateur, le rotor (2) entourant un canal d'écoulement (4), **caractérisée en ce que** le canal d'écoulement (4) comporte une surface de déflexion d'écoulement (7) pour dévier le courant d'air vers un orifice de sortie (13), la surface de déflexion d'écoulement (7) étant réalisée au moins approximativement sous forme conique ou hyperbolique et comportant une zone d'embase arrondie (11) qui est inclinée de manière ascendante et est adjacente à une surface inférieure inclinée (10) du rotor (2) dans le sens d'écoulement, la surface inférieure (10) et la zone d'embase (11) se prolongeant en continu.

2. Éolienne selon la revendication 1, **caractérisée en ce qu'**elle comporte un moyen pour générer une dépression dans la zone de l'orifice de sortie (13).

3. Éolienne selon la revendication 2, **caractérisée en ce que** le moyen pour générer une dépression comprend une buse Venturi (14) dans laquelle débouche le canal d'écoulement.

4. Éolienne selon la revendication 3, **caractérisée en ce que** le moyen pour générer une dépression, en particulier la buse Venturi (14), est monté à rotation et comporte de préférence une girouette.

5. Éolienne selon l'une des revendications précédentes, **caractérisée en ce que** le canal d'écoulement présente une section transversale diminuant au moins partiellement dans le sens d'écoulement.

6. Éolienne selon l'une des revendications précédentes, **caractérisée en ce que** les éléments de guidage d'air (5) entourant le rotor (2) sont réalisés sous forme d'aubes directrices profilées et les canaux délimités par les aubes directrices adjacentes présentent une section transversale diminuant dans le sens d'écoulement.

7. Éolienne selon l'une des revendications précédentes, **caractérisée en ce que** les orifices formés entre des éléments de guidage d'air (5) adjacents sont entièrement ou partiellement verrouillables.

8. Éolienne selon l'une des revendications précédentes, **caractérisée en ce qu'**un dispositif de commande est prévu pour l'ouverture et la fermeture des orifices.
